# EUROPEAN PATENT SPECIFICATION

(11) **EP 1 657 018 B1**
(45) Date of publication and mention of the grant of the patent: **07.01.2009**
(21) Application number: 04380223.0
(22) Date of filing: 10.11.2004
(51) Int. Cl.: B23K 11/31, B23K 11/25

(54) **Automatic compensation method and apparatus for welding clamp**
Automatische Ausgleichsvorrichtung und automatisches Ausgleichsverfahren für eine Schwei zange
Méthode et appareil d'équilibrage automatique pour une pince de soudage

(43) Date of publication of application: 17.05.2006
(73) Proprietor: SERRA SOLDADURA, SA, E-08040 Barcelona (ES)
(72) Inventor: Gendrau I Magre, Antoni, 08040 Barcelona (ES); Teixido I Casas, Miquel, 08040 Barcelona (ES); Sudria I Andreu, Antoni, 08040 Barcelona (ES)
(74) Representative: Torner Lasalle, Elisabet

(56) References cited:
- WO-A-20/04113011
- DE-A1- 3 927 435
- FR-A- 2 822 743
- US-A- 5 988 486

## Description

### Technical Field

The present invention concerns a welding pincer gun automatic compensation method and apparatus according to the preambles of claims 1 and 3. Such a method and apparatus are known from US 598846-B1. The apparatus of the invention includes a compensating actuator being made up of an electric motor and programmable, electronic control means, and the method comprises controlling the position and/or the feed current being required by the compensating electric motor based on signals being generated by sensing means being associated to the compensating motor.

### Background of the Invention

The welding pincer guns of the type in question comprise a couple of electrode-supporting horns being fitted to a supporting base, said horns being able to carry out a relative motion and to thus mutually approach the electrodes or move them away from each other under the action of a main actuator. An electronic control system controls said actuator in order to close the welding pincer gun till having brought the electrodes to a nipping position upon a workpiece and to thereupon apply a pressure or a pressure sequence on the workpiece during a predetermined period of time while simultaneously controlling the application of a welding current.

Said supporting base is usually fitted to the end of a robotic arm being controlled by said electronic control system in order to move the supporting base and successively position the welding pincer gun at the points where welds are to be effected. A compensating actuator links one of the horns with respect to the base and its actuation allows to change and/or fix the assembly being made up of the two horns forming the welding pincer gun with respect to the base, and to compensate the effect of external, forces such as the inertial or gravitational forces on the horns in different positions of the welding pincer gun.

A drawback of this type of welding pincer guns resides in the fact that one of the electrodes inevitably (even if slightly) contacts the workpiece before the other one does, and the closing force being applied to the horns can deform the workpiece before the application of the welding pressure to this latter.

In prior art devices this effect has been heretofore compensated by cancelling the action of the compensating actuator just an instant before the occurrence of the first contact with the workpiece, although then ceasing to compensate the action of the external forces, the pressure having been programmed in order to be exerted by the electrodes on the welding point hence risking to be altered by said external forces.

Recently and as per the disclosure given in the patent application WO 02/078892 another way to compensate said effect has been introduced wherein an electric motor is incorporated by way of compensating actuator and said compensation is carried out by controlling the torque being exerted by said motor during the welding pincer gun closing stage and the speed of said motor during the compensation stage. Said control is carried out based on a calculation being effected on the basis of the current being consumed by the compensating motor during the welding pincer gun closing travel and after the occurrence of the first contact. A drawback of such a method lies in the fact that the force being exerted on the workpiece in this first contact is indeterminate and in some cases could be sufficient to deform the workpiece before the compensation has actually happened to have taken place. Since the motion of the main actuator and that of the compensating motor are on the other hand simultaneous, by virtue of the friction of its transmission members the main actuator generates when moving some forces which act on the compensating motor and can distort the current measurement and hence bring about a poor compensation.

For example from said patent WO 02/078892 a welding pincer gun arrangement is also known wherein the compensating actuator and the main actuator include respective electric motors.

US 5988486-B1 discloses a welding pincer gun automatic compensation method wherein a welding gun comprises a couple of electrodes fitted to respective horns mutually linked in such a way that they are apt to carry out a relative motion, a main actuator between both horns, a link between said horns, a compensating actuator and electronic control means adapted to control the operation of said main and compensating actuators and other welding parameters according to a number of given steps.

The automatic welding pincer gun as well as the method disclosed in US 5988486-B1 are similar to the ones proposed in this invention except in that in this prior art the welding device generates a change in the control mode of the motor of the compensating actuator from a position control mode to a current control mode only as a consequence of the detection of a contact between one of the electrodes and the work piece.

### Summary of the Invention

The present invention contributes to obviate the drawbacks of the prior art systems having been described above by providing an automatic compensation method for controlling the motions of a welding pincer gun, as well as an apparatus for implementing said method. The method is apt to be applied both with "X"-type welding pincer guns and with "C"-type welding pincer guns as per the following detailed description, the apparatus hence contemplating both possibilities.

The welding pincer gun automatic compensation method as per the instant invention is to be applied with a welding pincer gun of a conventional type generally comprising a couple of electrodes being fitted to respective horns being mutually linked in such a way that they are apt to carry out a relative motion, and a main actuator being incorporated between both horns in order to bring about said relative motion between an open position wherein the electrodes are spaced apart, a pre-weld position wherein the electrodes are close to a workpiece, and a closed position wherein the electrodes are in contact with said workpiece and exert a pressure on it. The welding pincer gun is of the type besides comprising a link between at least one of said horns being the herein so-called compensating horn, and a supporting base, said link allowing said horn to carry out a relative motion with respect to said base. The welding pincer gun does as well comprise a compensating actuator, this latter including an electric motor and being apt to immobilise said compensating horn with respect to said supporting base or to change its position. Since the compensating horn is linked to the other horn and both are mutually connected through the above-mentioned main actuator, an immobilisation or a change of relative position of the compensating horn with respect to the supporting base involves an immobilisation or a change of relative position of the whole welding pincer gun being formed by the two horns regardless of the relative position between them. The welding pincer gun is finally of the type including electronic control means being adapted to control the operation of said main and compensating actuators and other welding parameters.

The method of the present invention is characterised in that it comprises the following steps. Initially a) establishing a predetermined relative position between said welding pincer gun in the open position and a welding point where a weld is to be effected in said workpiece. This relative position can be reached either through a shifting motion of the welding pincer gun or of the workpiece or through a combination of both. The method thereupon comprises b) situating the horns in said pre-weld position by means of an approaching travel being carried out by the main actuator under a command of said control means while the welding pincer gun is maintained in said predetermined relative position by said control means maintaining the compensating actuator motor in a position control mode regardless of the current being consumed by it. The next step c) comprises sensing by means of the control means the current being consumed by the compensating actuator motor when this latter is in said position control mode and thereupon switching the control to a current control mode wherein the control means maintain the compensating actuator motor in a state of irrespective of its angular position consuming the current having been previously sensed. The method thereupon proceeds to d) situate the horns in said closed position by means of a welding travel being carried out by the main actuator under a command of the control means while the compensating actuator motor remains in said current control mode. In this state the control means proceed to e) apply welding parameters of a conventional type, such as a welding current and a welding pressure or pressure sequence. The method finally comprises after the weld returning the horns to the open position by means of a return travel driven by the main actuator, and returning the control of the compensating actuator motor to the position control mode.

Thus when during the final closing of the welding pincer gun in step d) one of the electrodes first comes into contact with the workpiece the reaction force being opposed by the workpiece to the force of this first contact cooperates with the effort being so far exerted by the compensating motor, this latter because of being in the current control mode, i.e. being fed with a constant current, reacting by shifting the whole welding pincer gun in the direction of said reaction force, this in its turn easing the pressure of said first contact thereby bringing about a balance accompanying the whole closing motion during the welding travel of the welding pincer gun and thus preventing the deformation of the workpiece.

This has several advantages.
- In the first place, the force being exerted on the workpiece by the first electrode coming into contact with this latter is maintained at a value being at most more or less equal to the frictional forces not being involved in the main motion of the welding pincer gun (i.e. the frictional forces of the compensating motor transmission, etc.), this resulting in a value being low enough as to not detrimentally affect the workpiece in most of the applications.
- On the other hand, when the second electrode comes into contact with the workpiece the welding pincer gun is assuredly centred with respect to the workpiece, and there is also the assuredness that apart from the compressing forces substantially no strains will be transmitted to said workpiece.
- The compensation function is carried out in an automatic manner regardless of the welding pincer gun position, i.e. irrespective of the effect of the gravitational forces or other external forces on the whole welding pincer gun.
- The force of the main actuator does not distort the actuation being carried out by the compensating motor but cooperates with it.
- The compensating motion and the "welding travel" motion for the final closing of the welding pincer gun are carried out simultaneously, this resulting in a shorter time for each weld.

The welding pincer gun automatic compensation apparatus as per the present invention includes a welding pincer gun of a conventional type having been described above in relation to the method and is characterised in that it does besides comprise an angular position sensor being adapted to sense the angular position of said compensating actuator motor and a current sensor for sensing the current being consumed by said compensating actuator motor. The above-mentioned electronic control means are adapted to control the operation of the compensating actuator motor as per a position control mode wherein the compensating actuator motor is maintained in a predetermined constant angular position irrespective of the current being consumed by it, and as per a current control mode wherein the compensating actuator motor is maintained in a state of consuming a constant current irrespective of its angular position. This constant current has been previously sensed as the current being consumed by the compensating actuator motor during the position control mode.

In the apparatus of the present invention the welding pincer gun can be adapted to be fitted to the end of a robotic arm being able to move the welding pincer gun in order to position it with respect to the workpiece in different spatial orientations and/or at successive welding points. In this case the motions of said robotic arm are controlled by the electronic control means as per previously programmed sequences.

This configuration of the apparatus of the invention allows to implement the method of the instant invention having been described above.

### Brief Description of the Drawings

The invention will be more fully understood when reading the following detailed description of some exemplary embodiments with reference to the enclosed drawings wherein:
Figs. 1 through 3 are diagrammed views showing an exemplary embodiment of the apparatus of the invention in different states corresponding to different steps of the method as per the instant invention;
Figs. 4 through 6 are diagrammed views showing another exemplary embodiment of the apparatus of the invention in different states corresponding to the same several steps being shown in Figs. 1 through 3;
Fig. 7 is a perspective view of an apparatus as per the exemplary embodiment being shown in the diagrammed views of Figs. 1 through 3; and
Fig. 8 is a perspective view of an apparatus as per the exemplary embodiment being shown in the diagrammed views of Figs. 4 through 6.

### Detailed Description of some Exemplary Embodiments

The welding pincer gun automatic compensation method and apparatus as per the instant invention will be jointly described referring to the figures.

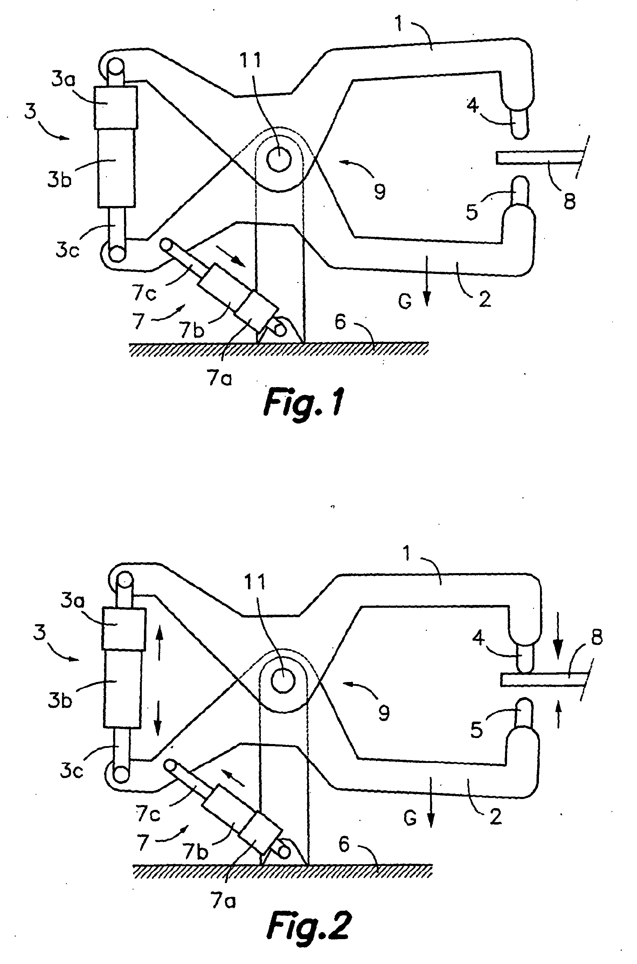

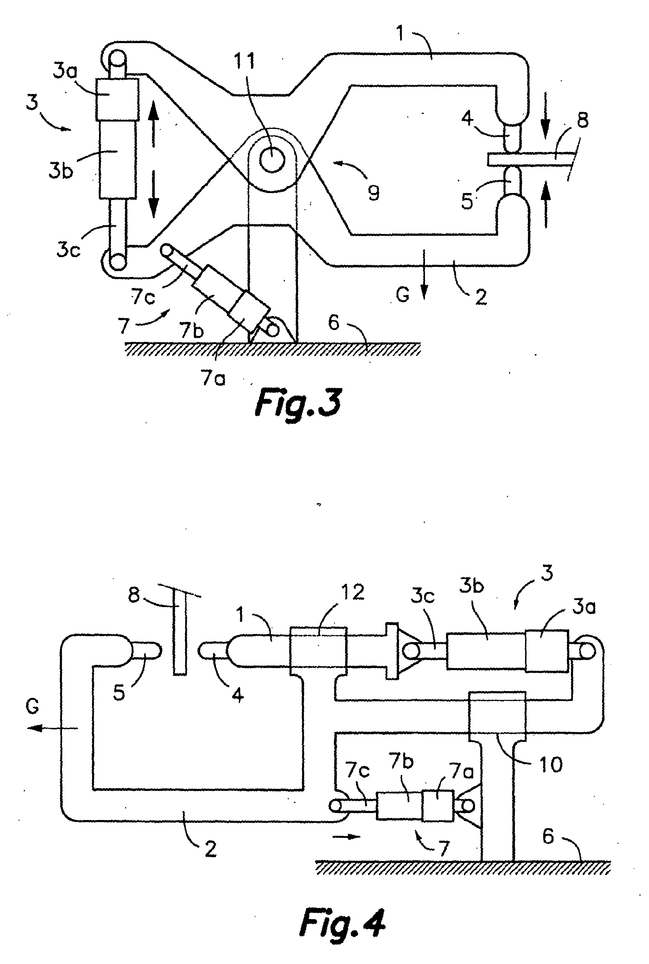

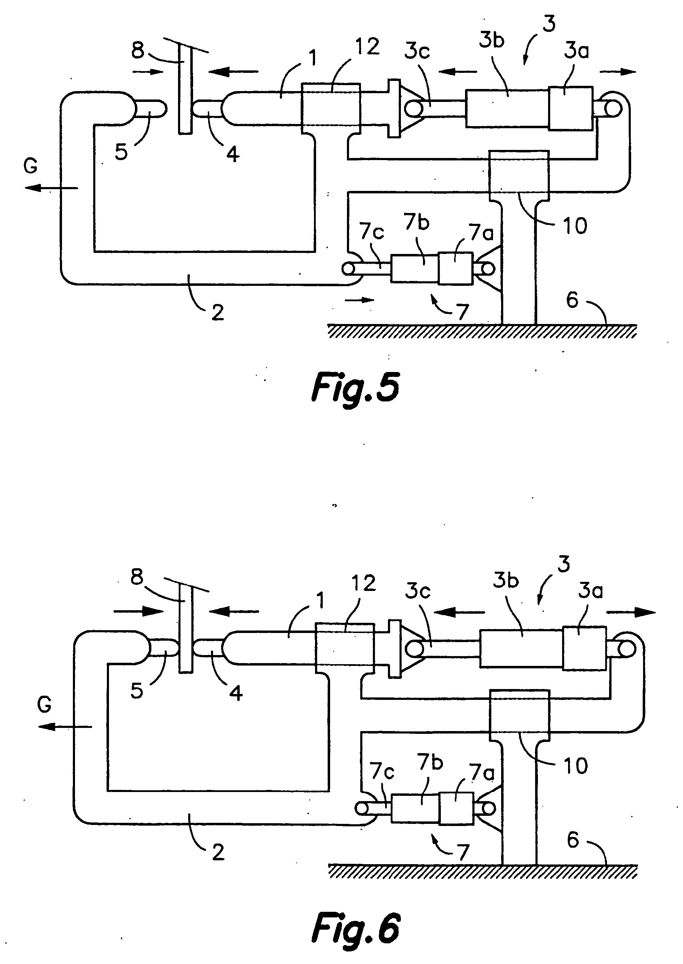

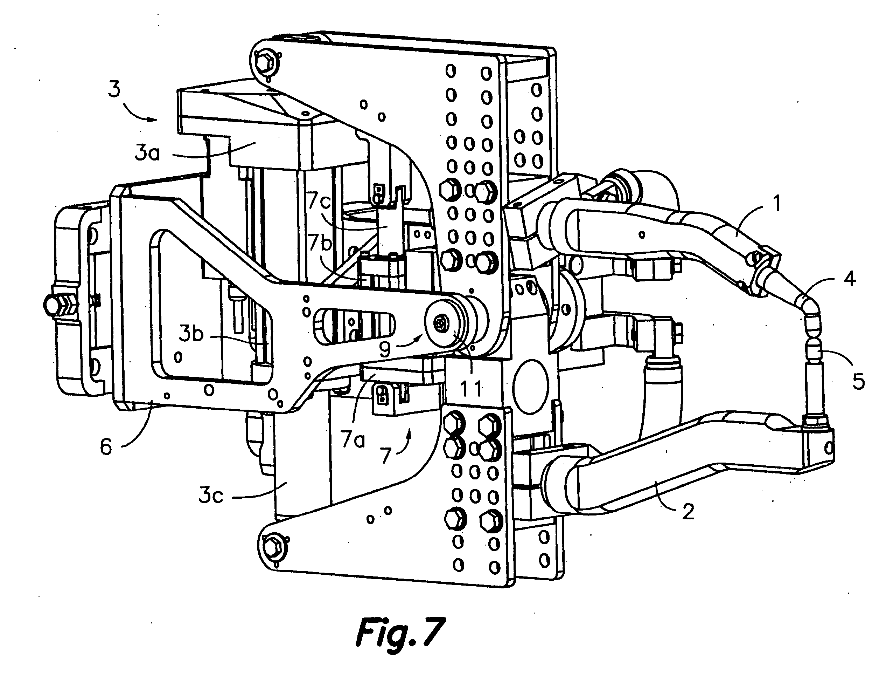

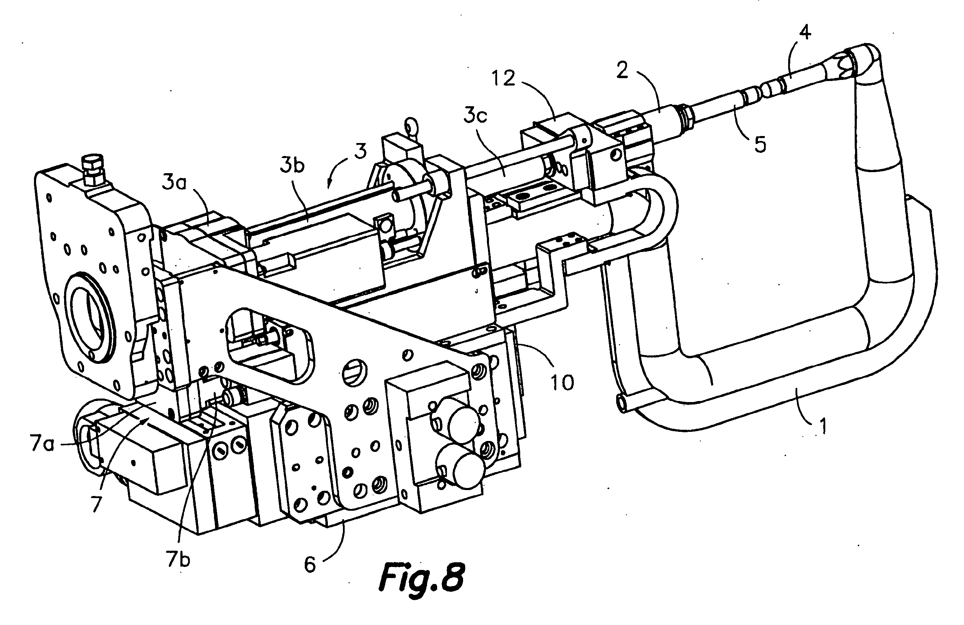

The apparatus being diagrammatically illustrated in Figs. 1 through 3 and shown in Fig. 7 comprises an "X"-type welding pincer gun, whereas the apparatus being diagrammatically illustrated in Figs. 4 through 6 and shown in Fig. 8 comprises an "C"-type welding pincer gun. Both types of welding pincer gun do nevertheless generically have some common features as follows: Both the "X"-type welding pincer gun and the "C"-type welding pincer gun comprise a couple of electrode-supporting horns 1, 2 being mutually linked in such a way that they are apt to carry out a relative motion between each other. A main actuator 3 is operatively incorporated between both horns 1, 2 in order to carry out the actuation bringing about said relative motion between the following positions: an open position (Figs. 1 and 4) wherein the electrodes 4, 5 are spaced apart; a pre-weld position (Figs. 2 and 5) wherein the electrodes 4, 5 are close to a workpiece 8 to be welded; and a closed position or welding position (Figs. 3 and 6) wherein the electrodes 4, 5 are in contact with said workpiece 8 and exert a pressure on it in order to effect the weld.

In the apparatus as per the exemplary embodiment being shown in Figs. 1 through 3 and in Fig. 7, i.e. in the "X"-type welding pincer gun, the above-mentioned link between the horns 1, 2 comprises a pin-jointed connection 11 allowing to carry out a pivoting motion around an axis being transversally arranged with respect to the travelling direction of the electrodes 4, 5, said pin-jointed connection allowing the horns 1, 2 to carry out a pivoting relative motion between each other. On the other hand, in the apparatus as per the exemplary embodiment being shown in Figs. 4 through 6 and in Fig. 8, i.e. in the "C"-type welding pincer gun, the above-mentioned link between the horns 1, 2 comprises a linear guide 12 extending in a direction being parallel to or aligned with the travelling direction of the electrodes 4, 5, said linear guide allowing the horns 1, 2 to carry out a translating relative motion between each other.

In both constructions the main actuator 3 preferably includes an electric motor 3a and a transmission 3b being apt to turn a turning motion of the electric motor 3a into a linear shifting motion of a rod 3c, although for the purposes of implementing the method of the invention any other type of actuator could be used, such as a fluid-operated cylinder. An actuator being based on an electric motor does in any case offer more control possibilities and obviates the need of supplying compressed air or another compressed fluid. In the illustrated exemplary embodiments a motor housing 3a is linked to one 1 of the horns, and a distal end of the rod 3c is linked to the other horn 2.

One of the horns herein being the so-called compensating horn 2 is linked to a supporting base 6 through a link allowing said horn to carry out a relative motion with respect to said base, in such a way that the whole welding pincer gun being formed by the two horns 1, 2 and the main actuator 3 can effect a motion with respect to the supporting base 6 without this affecting the mutually relative position of the two horns 1, 2, this latter only being determined by the position of the main actuator 3, or equivalently by the angular position of the motor 3a or of another turning member of the main actuator 3, said position being easily controllable by means of an angular position sensor being associated to electronic control means (not shown).

In the apparatus as per the exemplary embodiment being shown in Figs. 1 through 3 and in Fig. 7, i.e. in the "X"-type welding pincer gun, said link between the compensating horn 2 and the supporting base 6 comprises a pin-jointed connection 9 allowing to carry out a pivoting motion around an axis being transversally arranged with respect to the travelling direction of the electrodes 4, 5, said pin-jointed connection allowing the compensating horn 2 to carry out a pivoting relative motion with respect to the supporting base 6. Usually in order to further facilitate the construction the above-mentioned pin-jointed connection 11 between the two horns 1, 2 and said pin-jointed connection 9 between the compensating horn 2 and the supporting base 6 share a common pivoting axis being the same for both of them, as can be appreciated in the figures. On the other hand, in the apparatus as per the exemplary embodiment being shown in Figs. 4 through 6 and in Fig. 8, i.e. in the "C"-type welding pincer gun, said link between the compensating horn 2 and the supporting base 6 comprises a linear guide 10 extending in a direction being parallel to or aligned with the travelling direction of the electrodes 4, 5, said guide allowing the compensating horn 2 to carry out a translating relative motion with respect to said supporting base 6.

In order to prevent undesired motions of the above-mentioned assembly being made up of the two horns 1, 2 and the main actuator 3 with respect to the base 6 due to external forces such as the gravitational forces or the inertial forces being generated during shifting motions of the base 6 the device includes a compensating actuator 7 being arranged between the previously cited compensating horn 2 and the base 6 in order to immobilise the compensating horn 2, i.e. the whole welding pincer gun being formed by the two horns 1, 2 and the main actuator 3, with respect to the base 6, or to change its relative position. For the implementation of the method of the present invention the compensating actuator 7 must in this case indispensably include an electric motor. The compensating actuator 7 does for such a purpose comprise an electric motor 7a being connected to a transmission 7b being adapted to transform a turning motion of the motor 7a into a linear shifting motion of a rod 7c, a motor housing 7a being linked to a point being fixed with respect to the supporting base 6, a distal end of the rod 7c being linked to the compensating horn 2.

The supporting base 6 is usually designed to be fitted to the end of a robotic arm (not shown) being able to move the welding pincer gun to thus position it with respect to the workpiece 8 in different spatial orientations and/or at successive welding points. It is alternatively also usual to fixedly attach the supporting base 6 to a structure so that the welding pincer gun remains stationary and to arrange a robotic arm so as to position the workpiece 8 with respect to the welding pincer gun. It is also possible to arrange a pair of robotic arms or other shifting means so as to move both the welding pincer gun and the workpiece in order to establish a predetermined relative position between both of them. Programmable, electronic control means (not shown) are provided for controlling the motions of said robotic system, as well as the motions for the opening and closing of the horns 1, 2 of the welding pincer gun, the pressure being exerted by the electrodes 4, 5 on the workpiece 8, said pressure being generated by the force of the main actuator 3, the compensating motions being carried out by the compensating actuator 7, and the application of a welding current to the electrodes 4, 5 while these latter exert said pressure on the workpiece 8. The electronic control means do for such a purpose comprise several sensing means (not shown) being associated to different components of the apparatus. The control means of the apparatus of the invention do for example comprise at least one angular position sensor being adapted to sense the angular position of said motor 7a of the compensating actuator 7 and one current sensor for sensing the current being consumed by said motor 7a of the compensating actuator 7. These sensing means are able to generate signals being representative of the position of the rotor and of the current intensity being consumed by the motor 7a, and to send these signals to processing means pertaining to the control means and being able to process the received signals and to generate control commands and send them to the motor 7a of the compensating actuator 7 in order to thus control its angular position and/or the feed current to be supplied to it.

According to the method of the present invention the electronic control means are adapted for controlling the operation of the motor 7a of the compensating actuator 7 as per two different control modes: a position control mode wherein the motor 7a of the compensating actuator 7 is maintained in a predetermined constant angular position irrespective of the current being consumed by it; and a current control mode wherein the motor 7a of the compensating actuator 7 is maintained in a state of consuming a constant current irrespective of its angular position. Said constant current is previously sensed during the position control mode as per the method of the invention being described in detail as follows.

The automatic compensation method of the invention for a welding pincer gun with the features having been described above comprises the following steps. In the first place a) establishing a predetermined relative position between said welding pincer gun in the open position and a welding point where a weld is to be effected in said workpiece 8 (Figs. 1 and 4). As has been described above, said relative position can be established either through a shifting motion of the welding pincer gun or of the workpiece or through a combination of both. Thereupon b) situating the horns 1, 2 in said pre-weld position by means of an approaching travel being carried out by the main actuator 3 under a command of said control means (Figs. 2 and 5). Said approaching travel is carried out while the welding pincer gun is maintained in said predetermined relative position by the compensating actuator 7 being governed by said control means as per the above-mentioned position control mode. The method does thereupon comprise c) sensing by means of the previously cited current sensor of the control means the current being consumed by the motor 7a of the compensating actuator 7 when said motor is being controlled as per the position control mode, and thereupon switching the control to said current control mode wherein the control means maintain the motor 7a of the compensating actuator 7 in a state of constantly consuming the current having been previously sensed.

In this current control mode the motor 7a of the compensating actuator 7 is in a position to in a positive or in a negative sense effect changes of its angular position for example in response to a force being external to the system being formed by the compensating horn 2, the supporting base 6 and the compensating actuator 7, provided that the motor 7a exactly consumes the previously sensed current. When one of the electrodes 4, 5 firstly comes into contact with the workpiece 8 (Figs. 2 and 5) the workpiece 8 hence exerts a reaction force on the electrode 4, 5 being involved in said contact, said reaction force being added to or subtracted from the force being exerted by the compensating actuator 7 based on the constant current feeding it, and the motor 7a of the compensating actuator 7 operates in one or another sense so as to thus compensate said reaction force till reaching a balance state, the force being exerted by the electrode 4, 5 on the workpiece thus being prevented from actually deforming it.

The method then proceeds to d) situate the horns 1, 2 in said closed position (Figs. 3 and 6) by means of a welding travel being carried out by the main actuator 3 under a command of the control means while the motor 7a of the compensating actuator 7 remains in said current control mode, the compensating operation having been initiated in the previous step c) being therefore continued. Once the welding pincer gun has closed upon the workpiece 8 the control means proceed to apply the previously programmed welding parameters. Once having completed the weld the method finally comprises e) returning the horns 1, 2 to the open position by means of a return travel driven by the main actuator 3, and returning the control of the motor 7a of the compensating actuator 7 to the position control mode.

The specific exemplary embodiments having been described and illustrated above shall not be construed as limiting examples, theirs being a merely illustrative character as regards the scope of the invention as defined in the accompanying claims.

## Claims

1. A welding pincer gun automatic compensation method wherein said welding pincer gun is of the type comprising:
- a couple of electrodes (4, 5) being fitted to respective horns (1, 2) being mutually linked in such a way that they are apt to carry out a relative motion;
- a main actuator (3) being incorporated between both horns (1, 2) in order to bring about said relative motion between an open position wherein the electrodes (4, 5) are spaced apart, a pre-weld position wherein the electrodes (4, 5) are close to a workpiece (8), and a closed position wherein the electrodes (4, 5) are in contact with said workpiece (8) and exert a pressure on it;
- a link (9, 10) between at least one of said horns namely being the socalled compensating horn (2), and a supporting base (6), said link allowing said horn to carry out a relative motion with respect to said base;
- a compensating actuator (7), this latter including an electric motor (7a) and being apt to immobilise said compensating horn (2) with respect to said supporting base (6) or to change its position; and
- electronic control means being adapted to control the operation of said main and compensating actuators (3, 7) and other welding parameters;
**characterised in that** it comprises the steps of:
a) either through a shifting motion of the welding pincer gun or of the workpiece or through a combination of both establishing a predetermined relative position between said welding pincer gun in the open position and a welding point where a weld is to be effected in said workpiece (8);
b) situating the horns (1, 2) in said pre-weld position by means of an approaching travel being carried out by the main actuator (3) under a command of said control means while the welding pincer gun is maintained in said predetermined relative position by the compensating actuator (7) being governed by said control means as per a position control mode wherein said motor (7a) of the compensating actuator (7) is maintained in a constant angular position regardless of the current being consumed by it;
c) sensing by means of the control means the current being consumed by the motor (7a) of the compensating actuator (7) when said motor is being controlled as per said position control mode, and before any of the electrodes (4, 5) has got in touch with the workpiece (8), and thereupon switching the control to a current control mode wherein the control means maintain the motor (7a) of the compensating actuator (7) in a state of consuming a constant current being equal to the current having been previously sensed, said motor being in said state able to change its angular position in response to an external force;
d) situating the horns (1, 2) in said closed position by means of a welding travel being carried out by the main actuator (3) under a command of the control means while the motor (7a) of the compensating actuator (7) remains in said current control mode, and applying some welding parameters; and
e) after the weld returning the horns (1, 2) to the open position by means of a return travel driven by the main actuator (3), and returning the control of the motor (7a) of the compensating actuator (7) to the position control mode.

2. A method as per claim 1, **characterised in that** said welding pincer gun is integrated in a robotic system and said shifting motion of the welding pincer gun or of the workpiece or a combination of both in order to establish said predetermined relative position between the welding pincer gun and said welding point in the workpiece (8) is carried out by at least one robotic arm under commands of the control means based on previously programmed instructions.

3. A welding pincer gun automatic compensation apparatus wherein said welding pincer gun is of the type comprising:
- a couple of electrodes (4, 5) being fitted to respective horns (1, 2) being mutually linked in such a way that they are apt to carry out a relative motion;
- a main actuator (3) being incorporated between both horns (1, 2) in order to bring about said relative motion between an open position wherein the electrodes (4, 5) are spaced apart, a pre-weld position wherein the electrodes (4, 5) are close to a workpiece (8), and a closed position wherein the electrodes (4, 5) are in contact with said workpiece (8) and exert a pressure on it;
- a link (9, 10) between at least one of said horns namely being the socalled compensating horn (2), and a supporting base (6), said link allowing said horn to carry out a relative motion with respect to said base;
- a compensating actuator (7), this latter including an electric motor (7a) and being apt to immobilise said compensating horn (2) with respect to said supporting base (6) or to change its position; and
- electronic control means being adapted to control the operation of said main and compensating actuators (3, 7) and other welding parameters;
**characterised in that** it comprises an angular position sensor being adapted to sense the angular position of said motor (7a) of the compensating actuator (7) and a current sensor for sensing the current being consumed by said motor (7a) of the compensating actuator (7), said electronic control means being adapted to control the operation of the motor (7a) of the compensating actuator (7) as per at least two control modes:
- a position control mode wherein the motor (7a) of the compensating actuator (7) is maintained in a predetermined constant angular position irrespective of the current being consumed by it; and
- a current control mode wherein the motor (7a) of the compensating actuator (7) is maintained in a state of consuming a constant current having been previously sensed during the position control mode said motor being in said state able to change its angular position in response to an external force, - the control means further being adapted to carry out the method according to claim 1 or 2.

4. An apparatus as per claim 3, **characterised in that** the above-mentioned link between the horns (1, 2) comprises a pin-jointed connection (11) allowing to carry out a pivoting motion around an axis being transversally arranged with respect to the travelling direction of the electrodes (4, 5), said pin-jointed connection allowing the horns (1, 2) to carry out a pivoting relative motion between each other.

5. An apparatus as per claim 4, **characterised in that** said link between the compensating horn (2) and said supporting base (6) comprises a pin-jointed connection (9) allowing to carry out a pivoting motion around an axis being transversally arranged with respect to the travelling direction of the electrodes (4, 5), said pin-jointed connection allowing the horns (1, 2) to carry out a pivoting relative motion between each other and the compensating horn (2) to carry out a pivoting relative motion with respect to the supporting base (6).

6. An apparatus as per claim 3, **characterised in that** the above-mentioned link between the horns (1, 2) and said link between said compensating horn (2) and said supporting base (6) comprises a pin-jointed connection (9, 11) allowing to carry out a pivoting motion around an axis being transversally arranged with respect to the travelling direction of the electrodes (4, 5), said pin-jointed connection allowing the compensating horn (2) to carry out a pivoting relative motion with respect to the supporting base (6).

7. An apparatus as per claim 3, **characterised in that** the above-mentioned link between the horns (1, 2) comprises a linear guide (12) extending in a direction being parallel to or aligned with the travelling direction of the electrodes (4, 5), said linear guide allowing the horns (1, 2) to carry out a translating relative motion between each other.

8. An apparatus as per claim 7, **characterised in that** said link between the compensating horn (2) and said supporting base (6) comprises a linear guide (10) extending in a direction being parallel to or aligned with the travelling direction of the electrodes (4, 5), said guide allowing the compensating horn (2) to carry out a translating relative motion with respect to said supporting base (6).

9. An apparatus as per claim 3, **characterised in that** said compensating actuator (7) includes a transmission (7b) being apt to turn a turning motion of the electric motor (7a) into a linear shifting motion of a rod (7c).

10. An apparatus as per claim 3, **characterised in that** said main actuator (3) includes an electric motor (3a) and a transmission (3b) being apt to turn a turning motion of the electric motor (3a) into a linear shifting motion of a rod (3c).

11. An apparatus as per claim 3, **characterised in that** said welding pincer gun is integrated in a robotic system being controlled by said control means and comprising at least one robotic arm for effecting a shifting motion of the welding pincer gun or of the workpiece or a combination of both in order to establish a predetermined relative position between the welding pincer gun and a welding point in the workpiece (8).

## Patentansprüche

1. Automatisches Kompensationsverfahren für eine Punktschweißzange, wobei die Punktschweißzange folgendes umfasst:
- ein Paar Elektroden (4, 5), die an Armen (1, 2) befestigt sind, die so miteinander verbunden sind, dass sie zur Ausführung einer relativen Bewegung geeignet sind;
- einen Stellantrieb (3), der zwischen beiden Armen (1, 2) so eingebaut ist, dass er die relative Bewegung zwischen einer offenen Stellung, bei der die Elektroden (4, 5) voneinander beabstandet sind, einer Vorschweißstellung, bei der sich die Elektroden (4, 5) nahe eines Werkstücks (8) befinden und einer geschlossenen Stellung zustande bringt, bei der die Elektroden (4, 5) mit dem Werkstück (8) in Kontakt stehen und Druck darauf ausüben;
- eine Verbindung (9,10) zwischen mindestens einem der Arme, und zwar dem so genannten Kompensationsarm (2), und einem Träger (6), wodurch der Arm aufgrund dieser Verbindung bezüglich des Trägers eine relative Bewegung ausführen kann;
- einen Kompensationsstellantrieb (7) mit einem Elektromotor (7a), mit dem der Kompensationsarm (2) bezüglich des Trägers (6) festgeklemmt oder dessen Lage geändert werden kann; sowie
- elektronische Steuermittel, mit denen der Betrieb des Haupt- und Kompensationsstellantriebs (3, 7) sowie andere Schweißparameter gesteuert werden können;
**dadurch gekennzeichnet, dass** das Verfahren folgende Schritte umfasst:
a) Festlegung einer vorbestimmten relativen Lage zwischen der Punktschweißzange in der geöffneten Stellung und einem Schweißpunkt, an dem an dem Werkstück (8) ein Schweißvorgang durchgeführt werden soll, entweder durch eine Verschiebungsbewegung zwischen der Punktschweißzange oder des Werkstücks oder durch eine Kombination aus beiden;
b) Positionierung der Arme (1, 2) in der Vorschweißstellung mittels einer vom Stellantrieb (3) durch einen Befehl der Steuermittel ausgeführten Anfahrbewegung, unter gleichzeitiger Aufrechterhaltung der vorbestimmten relativen Lage der Punktschweißzange mittels des Kompensationsstellantriebs (7), der durch die Steuermittel gemäß einem Positionssteuermodus reguliert wird, bei dem der Motor (7a) des Kompensationsstellantriebs (7) in einer konstanten Winkelstellung unabhängig von dem von ihm verbrauchten Strom gehalten wird;
c) Erfassung des vom Motor (7a) des Kompensationsstellantriebs (7) verbrauchten Stroms durch die Steuermittel, bei Steuerung des Motors gemäß des Positionssteuermodus und bevor eine der Elektroden (4, 5) mit dem Werkstück (8) in Kontakt tritt, sowie anschließendes Umschalten der Steuerung in einen Stromsteuermodus, bei dem die Steuermittel den Motor (7a) des Kompensationsstellantriebs (7) in einem Zustand konstanten Stromverbrauchs halten, der dem zuvor erfassten Strom entspricht, wobei der Motor in diesem Zustand in der Lage ist, seine Winkellage als Antwort auf eine äußere Kraft zu ändern;
d) Positionierung der Arme (1, 2) in der geschlossenen Stellung mittels eines Schweißwegs, der vom Hauptstellantrieb (3) durch einen Befehl der Steuermittel durchgeführt wird, während der Motor (7a) des Kompensationsstellantriebs (7) im Stromsteuermodus verbleibt sowie Anwendung einiger Schweißparameter; sowie
e) nach erfolgter Schweißung Zurückfahren der Arme (1, 2) in die offene Stellung mittels eines durch den Hauptstellantrieb (3) angetriebenen Rückwegs und Zurückschalten des Motors (7a) des Kompensationsstellantriebs (7) in den Positionssteuermodus.

2. Verfahren nach Anspruch 1, **dadurch gekennzeichnet, dass** die Punktschweißzange in ein Robotersystem integriert ist und die Verschiebungsbewegung der Punktschweißzange oder des Werkstücks oder einer Kombination aus beiden zur Festlegung einer relativen Position zwischen der Punktschweißzange und des Schweißpunkts im Werkstück (8) durch mindestens einen Roboterarm durch Befehle der Steuermittel auf der Grundlage zuvor programmierter Anweisungen erfolgt.

3. Automatisches Punktschweißzangenkompensationsgerät, wobei die Punktschweißzange folgendes umfasst:
- ein Paar Elektroden (4, 5), die an Armen (1, 2) befestigt sind, die so miteinander verbunden sind, dass sie zur Ausführung einer relativen Bewegung geeignet sind;
- einen Stellantrieb (3), der zwischen beiden Armen (1, 2) so eingebaut ist, dass er die relative Bewegung zwischen einer offenen Stellung, bei der die Elektroden (4, 5) voneinander beabstandet sind, einer Vorschweißstellung, bei der sich die Elektroden (4, 5) nahe eines Werkstücks (8) befinden und einer geschlossenen Stellung zustande bringt, bei der die Elektroden (4, 5) mit dem Werkstück (8) in Kontakt stehen und Druck darauf ausüben;
- eine Verbindung (9,10) zwischen mindestens einem der Arme, und zwar dem so genannten Kompensationsarm (2), und einem Träger (6), wodurch der Arm aufgrund dieser Verbindung bezüglich des Trägers eine relative Bewegung ausführen kann;
- einen Kompensationsstellantrieb (7) mit einem Elektromotor (7a), mit dem der Kompensationsarm (2) bezüglich des Trägers (6) festgeklemmt oder dessen Lage geändert werden kann; sowie
- elektronische Steuermittel, mit denen der Betrieb des Haupt- und Kompensationsstellantriebs (3, 7) sowie andere Schweißparameter gesteuert werden können;
**dadurch gekennzeichnet, dass** es einen Winkelstellungssensor, mit dem die Winkelstellung des Motors (7a) des Kompensationsstellantriebs (7) erfasst werden kann, und einen Sensor aufweist, mit dem der durch den Motor (7a) des Kompensationsstellantriebs (7) verbrauchte Strom erfasst werden kann, wobei die Steuermittel dazu geeignet sind, den Betrieb des Motors (7a) des Kompensationsstellantriebs (7) über mindestens zwei Steuermodi zu steuern:
- einen Positionssteuermodus, bei dem der Motor (7a) des Kompensationsstellantriebs (7) unabhängig des vom ihm verbrauchten Stroms in einer vorbestimmten, konstanten Winkellage gehalten wird, und
- einen Stromsteuermodus, bei dem die Steuermittel den Motor (7a) des Kompensationsstellantriebs (7) in einem Zustand konstanten Stromverbrauchs halten, der zuvor im Positionssteuermodus erfasst wurde, wodurch der Motor in diesem Zustand in der Lage ist, seine Winkellage als Antwort auf eine äußere Kraft zu ändern, wobei die Steuermittel außerdem dazu befähigt sind, das Verfahren nach Anspruch 1 oder 2 durchzuführen.

4. Gerät nach Anspruch 3, **dadurch gekennzeichnet, dass** die oben genannte Verbindung zwischen den Armen (1, 2) eine über einen Stift verbundene Verbindung (11) aufweisen, über die eine Drehbewegung um eine Achse ausgeführt werden kann, die quer zur Verfahrrichtung der Elektroden (4, 5) angeordnet ist, wodurch die Arme (1, 2) aufgrund der über einen Stift verbundenen Verbindung eine Drehbewegung relativ zueinander ausführen können.

5. Gerät nach Anspruch 4, **dadurch gekennzeichnet, dass** die Verbindung zwischen dem Kompensationsarm (2) und dem Träger (6) eine über einen Stift verbundene Verbindung (9) aufweist, über die eine Drehbewegung um eine Achse ausgeführt werden kann, die quer zur Verfahrrichtung der Elektroden (4, 5) angeordnet ist, wodurch die Arme (1, 2) aufgrund der über einen Stift verbundenen Verbindung eine Drehbewegung relativ zueinander und der Kompensationsarm (2) eine Drehbewegung bezüglich des Trägers (6) ausführen können.

6. Gerät nach Anspruch 3, **dadurch gekennzeichnet, dass** die oben genannte Verbindung zwischen den Armen (1, 2) und die Verbindung zwischen dem Kompensationsarm (2) und dem Träger (6) eine über einen Stift verbundene Verbindung (9, 11) aufweisen, über die eine Drehbewegung um eine Achse ausgeführt werden kann, die quer zur Verfahrrichtung der Elektroden (4, 5) angeordnet ist, wodurch der Kompensationsarm (2) aufgrund der über einen Stift verbundenen Verbindung eine relative Drehbewegung bezüglich des Trägers (6) ausführen kann.

7. Gerät nach Anspruch 3, **dadurch gekennzeichnet, dass** die oben genannte Verbindung zwischen den Armen (1, 2) eine Linearführung (12) aufweist, die sich in einer Richtung parallel oder ausgerichtet zur Verfahrrichtung der Elektroden (4, 5) erstreckt, wodurch die Arme (1, 2) aufgrund der Linearführung eine Translationsbewegung relativ zueinander ausführen können.

8. Gerät nach Anspruch 7, **dadurch gekennzeichnet, dass** die Verbindung zwischen dem Kompensationsarm (2) und dem Träger (6) eine Linearführung (10) aufweist, die sich in einer Richtung parallel oder ausgerichtet zur Verfahrrichtung der Elektroden (4, 5) erstreckt, wodurch der Kompensationsarm (2) aufgrund der Linearführung eine Translationsbewegung bezüglich des Trägers (6) ausführen kann.

9. Gerät nach Anspruch 3, **dadurch gekennzeichnet, dass** der Kompensationsstellantrieb (7) ein Getriebe (7b) aufweist, mit dem eine Drehbewegung des Elektromotors (7a) in eine lineare Verschiebungsbewegung einer Stange (7c) umgewandelt werden kann.

10. Gerät nach Anspruch 3, **dadurch gekennzeichnet, dass** der Hauptstellantrieb (3) einen Elektromotor (3a) und ein Getriebe (3b) aufweist, mit dem eine Drehbewegung des Elektromotors (3a) in eine lineare Verschiebungsbewegung einer Stange (3c) umgewandelt werden kann.

11. Gerät nach Anspruch 3, **dadurch gekennzeichnet, dass** die Punktschweißzange in ein Robotersystem integriert ist, das durch die Steuermittel gesteuert wird und mindestens einen Roboterarm zur Durchführung einer Verschiebungsbewegung der Punktschweißzange oder des Werkstücks oder einer Kombination aus beiden zur Festlegung einer vorbestimmten relativen Position zwischen der Punktschweißzange und einem Schweißpunkt im Werkstück (8) aufweist.

## Revendications

1. Méthode de compensation automatique de pistolet à pinces pour soudage dans laquelle ce pistolet à pinces pour soudage est du genre comportant:
- une paire d'électrodes (4,5) étant rapportée sur des bras respectifs (1,2) qui sont reliés entre eux de sorte qu'ils sont aptes pour effectuer un mouvement relatif;
- un actionneur principal (3) étant incorporé entre ces bras (1, 2) afin d'effectuer ce mouvement relatif entre une position ouverte dans laquelle les électrodes (4,5) sont écartées, une position préalable au soudage dans laquelle les électrodes (4, 5) sont près d'une pièce en cours de travail (8) et une position fermée dans laquelle les électrodes (4, 5) sont en contact avec cette pièce en cours de travail (8) et exerce une pression sur celle-ci;
- un raccord (9, 10) entre au moins un de ces bras qui sont notamment les bras désignés bras de compensation (2) et une base de support (6), ce raccord permettant que ce bras effectue un mouvement relatif par rapport à cette base;
- un actionneur de compensation (7), ce dernier comportant un moteur électrique (7a) et étant apte pour immobiliser ce bras de compensation (2) par rapport à cette base de support (6) ou pour changer sa position; et
- des moyens de contrôle électroniques étant adaptés pour contrôler le fonctionnement de ces actionneurs principaux et de compensation (3,7) et d'autres paramètres de soudage;
**caractérisée en ce qu'**elle comporte les étapes suivantes:
a) à travers un mouvement de déplacement soit du pistolet à pinces pour soudage soit de la pièce en cours de travail ou bien une combinaison des deux en établissant une position relative prédéterminée entre ce pistolet à pinces de soudage dans la position ouverte et un point de soudure où il faut effectuer le soudage sur cette pièce en cours de travail (8);
b) situé les bras (1,2) à cette position préalable au soudage au moyen d'un déplacement de rapprochement effectué par l'actionneur principal (3) sous une commande de ces moyens de contrôle tandis que le pistolet à pinces de soudage est maintenu dans cette position relative prédéterminée par l'actionneur de compensation (7) contrôlés par ces moyens de contrôle selon un mode de contrôle de position dans lequel ce moteur (7a) de l'actionneur de compensation (7) est maintenu dans une position angulaire constante indépendamment du courant qu'il consomme;
c) détecter avec les moyens de contrôle le courant qui est consommé par le moteur (7a) de l'actionneur de compensation (7) lorsque ce moteur est contrôlé selon ce mode de contrôle de position, et avant qu'une quelconque des électrodes (4, 4) soit entrée en contact avec la pièce en cours de travail (8) et ensuite commuter le contrôle à un mode de contrôle de courant dans lequel les moyens de contrôle maintienent le moteur (7a) de l'actionneur de compensation (7) dans un état de consommation d'un courant constant étant égal au courant ayant été préalablement détecté, ce moteur étant dans cet état capable de changer sa position angulaire comme réponse à une force externe;
d) situer les bras (1,2) dans cette position fermée au moyen d'un déplacement de soudage effectué par l'actionneur principal (3) sous une commande des moyens de contrôle tandis que le moteur (7a) de l'actionneur de compensation (7) reste dans ce mode de contrôle de courant et appliquer quelques paramètres de soudage; et
e) après le soudage, retourner les bras (1,2) à une position ouverte au moyen d'un déplacement de retour entraîné par l'actionneur principal (3) et retourner le contrôle du moteur (7a) de l'actionneur de compensation (7) au mode de contrôle de position.

2. Méthode conformément à la revendication 1, **caractérisée en ce que** ce pistolet à pince pour soudage est intégré dans un système robotique et ce mouvement de déplacement du pistolet à pinces pour soudage ou de la pièce en cours de travail ou une combinaison des deux afin d'établir cette position relative prédéterminée entre le pistolet à pinces de soudage et ce point de soudage sur la pièce en cours de travail (8) est effectué par au moins un bras robotique sous les commandes des moyens de contrôle basés sur des instructions préalablement programmées.

3. Appareil pour la compensation automatique d'un pistolet à pinces pour soudage dans lequel ce pistolet à pince pour soudage est du genre comportant:
- une paire d'électrodes (4,5) étant rapportée sur des bras respectifs (1,2) qui sont reliés entre eux de sorte qu'ils sont aptes pour effectuer un mouvement relatif;
- un actionneur principal (3) étant incorporé entre ces bras (1, 2) afin d'effectuer ce mouvement relatif entre une position ouverte dans laquelle les électrodes (4,5) sont écartées, une position préalable au soudage dans laquelle les électrodes (4, 5) sont près d'une pièce en cours de travail (8) et une position fermée dans laquelle les électrodes (4, 5) sont en contact avec cette pièce en cours de travail (8) et exerce une pression sur celle-ci;
- un raccord (9, 10) entre au moins un de ces bras qui sont notamment les bras désignés bras de compensation (2) et une base de support (6), ce raccord permettant que ce bras effectue un mouvement relatif par rapport à cette base;
- un actionneur de compensation (7), ce dernier comportant un moteur électrique (7a) et étant apte pour immobiliser ce bras de compensation (2) par rapport à cette base de support (6) ou de changer sa position; et
- des moyens de contrôle électroniques étant adaptés pour contrôler le fonctionnement de ces actionneurs principaux et de compensation (3,7) et d'autres paramètres de soudage;
**caractérisé en ce qu'**il comporte un détecteur de position angulaire étant adapté pour détecter la position angulaire de ce moteur (7a) de l'actionneur de compensation (7) et un détecteur de courant pour détecter le courant consommé par le moteur (7a) de l'actionneur de compensation (7), ces moyens de contrôle électroniques étant adaptés pour contrôler le fonctionnement du moteur (7a) de l'actionneur de compensation (7) selon au moins deux modes de contrôle:
- un mode de contrôle de position dans lequel le moteur (7a) de l'actionneur de compensation (7) est maintenu dans une position angulaire constante prédéterminée indépendamment du courant qu'il consomme; et
- un mode de contrôle de courant dans lequel le moteur (7a) de l'actionneur de compensation (7) est maintenu dans un état de consommation de courant constante ayant été préalablement détectée durant le mode de contrôle de position, ce moteur étant dans cet état capable de changer sa position angulaire comme réponse à une force externe, les moyens de contrôle étant en plus adaptés pour effectuer la méthode conformément au revendications 1 ou 2.

4. Un appareil conformément à la revendication 3, **caractérisé en ce que** ledit raccord entre les bras (1,2) comporte une articulation (11) permettant d'effectuer un mouvement pivotant autour d'un axe étant transversalement aménagé par rapport à la direction de déplacement des électrodes (4,5), cette articulation permettant que les bras (1,2) effectuent un mouvement relatif pivotant entre eux.

5. Un appareil conformément à la revendication 4, **caractérisée en ce que** ce raccord entre le bras de compensation (2) de cette base de support (6) comprend une articulation (9) permettant d'effectuer un mouvement pivotant autour d'un axe étant transversalement aménagé par rapport à la direction de déplacement des électrodes (4,5), cette articulation permettant que les bras (1,2) effectuent un mouvement pivotant relatif entre eux et le bras de compensation (2) pour effectuer un mouvement pivotant relatif par rapport à la base de support (6).

6. Un appareil conformément à la revendication 3, **caractérisé en ce que** ledit raccord entre les bras (1,2) et ce raccord entre ce bras de compensation (2) et cette base de support (6) comporte une articulation (9, 11) permettant d'effectuer un mouvement pivotant autour d'un axe étant transversalement aménagé par rapport à la direction de déplacement des électrodes (4,5), cette articulation permettant que le bras de compensation (2) effectue un mouvement pivotant relatif par rapport à la base de support (6).

7. Un appareil conformément à la revendication 3, **caractérisé en ce que** ledit raccord entre les bras (1,2) comporte un guidage linéaire (12) qui s'étend dans une direction parallèle où alignée à la direction de déplacement des électrodes (4,5), ce guidage linéaire permettant que les bras (1,2) effectuent un mouvement de translation relatif entre eux.

8. Un appareil conformément à la revendication 7, **caractérisée en ce que** ce raccord entre le bras de compensation (2) et cette base de support (6) comporte un guidage linéaire (10) s'étendant dans une direction parallèle ou alignée à la direction de déplacement des électrodes (4,5) ce guidage permettant que le bras de compensation (2) effectue un mouvement de translation relatif par rapport à cette base de support (6).

9. Un appareil conformément à la revendication 3, **caractérisé en ce que** cet actionneur de compensation (7) comporte une transmission (7b) adaptée pour entraîner en rotation le moteur électrique (7a) avec un mouvement de déplacement linéaire d'une tige (7c).

10. Un appareil conformément à la revendication 3, **caractérisé en ce que** cet actionneur principal (3) comporte un moteur électrique (3a) et une transmission (3b) étant adaptés pour entraîner un mouvement de rotation du moteur électrique (3a) en un mouvement de déplacement linéaire d'une tige (3c).

11. Un appareil conformément à la revendication 3, **caractérisée en ce que** ce pistolet à pinces pour soudage est intégré dans un système robotique étant contrôlé par ces moyens de contrôle et comportant au moins un bras robotique pour effectuer un mouvement de déplacement du pistolet à pinces pour soudage ou de la pièce en cours de travail ou une combinaison des deux afin d'établir une position relative prédéterminée entre le pistolet à pinces pour soudage et un point de soudage sur la pièce en cours de travail (8).
